**Europäisches Patentamt**

**European Patent Office**

**Office européen des brevets**

(11) Veröffentlichungsnummer: **0 332 059**
**B1**

(12) **EUROPÄISCHE PATENTSCHRIFT**

(45) Veröffentlichungstag der Patentschrift: **16.01.91**

(21) Anmeldenummer: **89103711.1**

(22) Anmeldetag: **03.03.89**

(51) Int. Cl.⁵: **B 62 D 31/00, B 60 R 5/04**

(54) Lagerung für eine schwenkbare Abdeckplatte.

(30) Priorität: **11.03.88 DE 3808083**

(43) Veröffentlichungstag der Anmeldung:
**13.09.89 Patentblatt 89/37**

(45) Bekanntmachung des Hinweises auf die
Patenterteilung:
**16.01.91 Patentblatt 91/03**

(84) Benannte Vertragsstaaten:
**DE ES FR GB IT**

(56) Entgegenhaltungen:
**DE-B-2 647 104**
**DE-U-7 808 131**

(73) Patentinhaber: **AUDI AG**
**Auto-Union-Strasse 1 Postfach 220**
**D-8070 Ingolstadt (DE)**

(72) Erfinder: **Siegert, Johann**
**Ringstrasse 39**
**D-8401 Alteglofsheim (DE)**
Erfinder: **Wilde, Walter**
**Porschestrasse 5**
**D-8070 Ingolstadt (DE)**

(74) Vertreter: **Engelhardt, Harald**
**AUDI AG Patentabteilung Postfach 220**
**D-8070 Ingolstadt (DE)**

Courier Press, Leamington Spa, England.

**Beschreibung**

Die Erfindung betrifft eine Lagerung für eine schwenkbare Abdeckplatte über dem Kofferraum von Kraftfahrzeugen gemäß dem Oberbegriff des Anspruchs 1. Eine derartige Lagerung ist z.B. durch die DE-B-2 647 104 bekannt.

Um den Kofferraum zu vergrößern, haben sich bei Fahrzeugen mit einer Heckklappe verschiedene Systeme bewährt. Die meisten basieren darauf, daß die Rücksitzbank oder Teile derselben umgeklappt bzw. geschwenkt werden. Dabei ist es meist erforderlich, die den Kofferraum abdeckende platte zu entfernen. Dies kann auch erforderlich werden, wenn die Rücksitzbank nicht umgeklappt werden soll, jedoch eine größere Ladehöhe des vorhandenen Kofferraums gewünscht wird.

Zu diesem Zweck wurde in der DE-B-2 647 104 vorgesehen, die Abdeckplatte schwenkbar in den Seitenwänden des Kofferraums befestigten Aufnahmeteilen zu lagern und durch ein Federelement zu sichern.

Diese bekannte Lagerung ist auf der Seitenwand angeordnet. Beim Einschieben einer gelösten Abdeckplatte in die Lagerung muß der vordere Rand der Abdeckplatte mit den beiden Führungsschlitzen der Lagerung in Eingriff gebracht werden. Dies ist schwierig, da es erforderlich ist, um ein Verkanten zu vermeiden, die Abdeckplatte gleichförmig in die Schlitze der an den beiden Seitenwänden angeordneten Führung einzuschieben. Des weiteren beeinträchtigt die von den Seitenwänden vorstehende Halterung unter Umständen den Beladevorgang.

Es ist daher Aufgabe der vorliegenden Erfindung, eine Halterung der eingangs genannten Art derart weiterzubilden, daß der Einschiebevorgang der Abdeckplatte erleichtert wird.

Diese Aufgabe wird durch die in Anspruch 1 gekennzeichnete Erfindung gelöst, d.h. durch ein in der Wandverkleidung einer oder beider Seitenwände des Fahrzeugs mit dieser bzw. diesen abschließend angeordnetes Formteil, eine in dem Formteil vorgesehene, quer zur Fahrtrichtung verlaufende, zylindrische Öffnung zur Aufnahme des Aufnahmeteils, wobei das Lagerschild stationär im Formteil angeordnet ist und das Formteil einen in Längsrichtung verlaufenden Führungsschlitz aufweist, der in die querverlaufende, zylindrische Öffnung für das Aufnahmeteil mündet.

Durch diese Anordnung wird in vorteilhafter Weise die eigentliche Lagerung in die Seitenwand des Fahrzeugs integriert, so daß die Abdeckplatte dicht an die Seitenwand herangeführt werden kann, wobei dennoch ein einfaches Lösen und Befestigen der Abdeckplatte möglich ist.

Vorteilhafte Ausgestaltungen der Erfindung ergeben sich aus den Unteransprüchen.

Dadurch, daß das Aufnahmeteil eine runde Frontplatte mit einem an ihrem Rand angeordneten, sich in Achsrichtung erstreckenden Führungsflansch, der mit der Wandung der Öffnung in gleitendem Eingriff steht, aufweist, wird in vorteilhafter Weise eine vollkommen geschlossene Anordnung der Halterung erreicht.

In weiterer vorteilhafter Ausgestaltung der Erfindung ist vorgesehen, daß das Aufnahmeteil einen im mittleren Teil der Frontplatte angeordneten, sich bis zu ihrem Rand erstreckenden Schlitz aufweist, der sich in Achsrichtung von der Frontplatte nach hinten erstreckt. Die schlitzförmige Ausgestaltung der Halterung gestattet eine sehr einfache Konstruktion des Aufnahmeteils, so daß es kostengünstig herstellbar ist.

Zweckmäßigerweise ist vorgesehen, daß der Schlitz im wesentlichen quaderförmig ausgebildet ist, durch eine Anschlagswand in Einschiebrichtung der Abdeckplatte, eine hintere Wand in Achsrichtung des Aufnahmeteils und durch eine obere und untere Wand begrenzt und im Bereich der Frontplatte und des Randes offen ist.

Damit die Abdeckplatte verschiedene angehobene Stellungen einnehmen kann, ist vorgesehen, daß das Aufnahmeteil auf seiner Rückseite Rastvorsprünge aufweist.

Zweckmäßigerweise sind die Rastvorsprünge auf der Rückseite der hinteren Wand des Schlitzes, sich vom Rand bis in die Nähe der Achse erstreckend, angeordnet.

Zur Befestigung des Aufnahmeteils ist auf der Rückseite der hinteren Wand des Schlitzes eine sich in Achsrichtung erstreckende Schaftschraube angeordnet.

Damit die in die Halterung eingeschobene Abdeckplatte nicht unbeabsichtigt aus dem Aufnahmeteil herausgezogen wird, weist die hintere Wand im Bereich der Anschlagswand eine Verriegelungsöffnung auf.

Das Lagerschild weist in vorteilhafter Weise eine im wesentlichen quadratische Lagerfläche mit auf der Vorderseite angeordneten, den Rastvorsprüngen des Aufnahmeteils entsprechenden Rastnuten und einer mittleren Öffnung für die Schaftschraube des Aufnahmeteils sowie einen sich von der Lagerfläche erstreckenden Befestigungsabschnitt auf.

Dies ermöglicht eine einfache konstruktive Ausgestaltung, die die erforderliche Festigkeit aufweist und dabei kostengünstig, z.B. mittels Spritzgießen aus Kunststoff, hergestellt werden kann.

Zur Verspannung des Aufnahmeteils mit dem Lagerschild weist die Lagerfläche auf ihrer Rückseite eine Federgegenlagerfläche auf, gegen die sich eine auf der Schaftschraube angeordnete Schraubenfeder abstützt, die mit ihrem anderen Ende gegen eine auf die Schraube aufschraubbare Mutter anliegt.

Wie bereits erwähnt, ist vorgesehen, daß das Aufnahmeteil, das Lagerschild und das Formteil als Spritzgußteile aus Kunststoff ausgebildet sind.

Ein Ausführungsbeispiel der Erfindung ist in der Zeichnung dargestellt und wird im folgenden näher beschrieben. Es zeigen:

Fig. 1 eine Seitenansicht des Heckteils eines Fließheck-Kraftfahrzeugs mit geschlossener Heckklappe;

Fig. 2 das Fahrzeug nach Fig. 1 mit geöffneter Heckklappe und nach oben geschwenkter Abdeckplatte;

Fig. 3 eine perspektivische Ansicht des Formteils;

Fig. 4 eine Ansicht des Aufnahmeteils von hinten;

Fig. 5 eine seitliche Schnittansicht des Aufnahmeteils längs der Linie V-V in Fig. 4;

Fig. 6 eine Ansicht des Aufnahmeteils von vorne;

Fig. 7 eine Ansicht des Lagerschildes von vorne;

Fig. 8 eine Seitenansicht des Lagerschildes; und

Fig. 9 eine Ansicht des Lagerschildes von hinten.

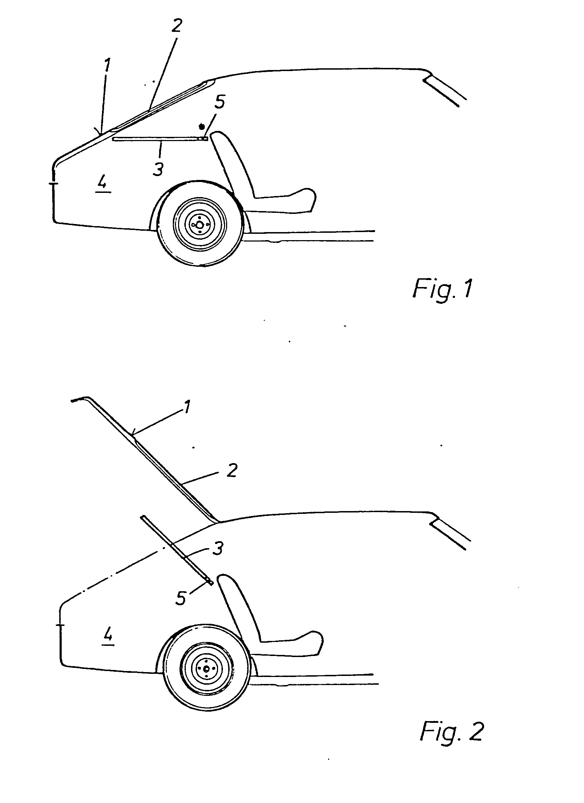

In der Zeichnung ist mit 1 die Heckklappe eines Personenwagens bezeichnet, die eine Heckscheibe 2 aufweist. Die Abdeckplatte 3 über dem Kofferraum 4 ist mit ihren beiden vorderen Ecken in je einer Lagerung 5 angelenkt. Die Lagerungen 5 ermöglichen das Schwenken der Abdeckplatte 3 in eine etwa waagerechte Schließstellung (Fig. 1), eine Offenstellung (Fig. 2) sowie ein Herausnehmen der Abdeckplatte 3.

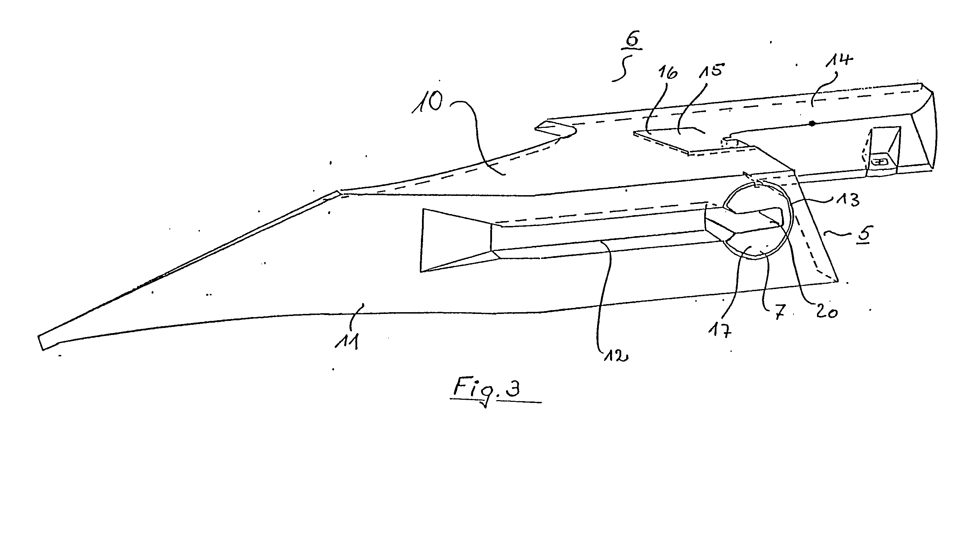

Die Lagerung 5 ist in den Fig. 3 bis 9 im einzelnen dargestellt. Sie umfaßt ein Formteil 6, ein Aufnahmeteil 7, ein Lagerschild 8 sowie eine um eine Schaftschraube 9 angeordnete Schraubenfeder und eine auf die Schraubenfeder aufschraubbare Mutter (beide nicht dargestellt).

Das Formteil 6 (siehe Fig. 3) ist im wesentlichen keilförmig ausgebildet, d.h. es verbreitert sich von seinem hinteren, mit der Seitenwand des Fahrzeugs fluchtenden Ende nach vorne, wobei der sich verbreiternde Teil von einer oberen Wand 10 abgedeckt wird. In der Seitenwand 11 ist ein Führungsschlitz 12 ausgebildet, der in eine quer zur Längsachse des Formteils 6 verlaufende zylindrische Öffnung 13 mündet. Hinter der zylindrischen Öffnung 13, in Längsrichtung des Formteils 6 gesehen, ist die Seitenwand 11 des Formteils 6 zur Seitenwand des Fahrzeugs hin abgestuft und erstreckt sich bis zu einem armförmigen Befestigungsabschnitt 14 des Formteils 6. Im Bereich der zylinderförmigen Öffnung 13 ist in der oberen Wand 10 eine mittels einem Deckel 16 verschließbare Montageöffnung 15 vorgesehen. Das Formteil 6 ist zweckmäßigerweise als Spritzgußteil aus Kunststoff ausgebildet.

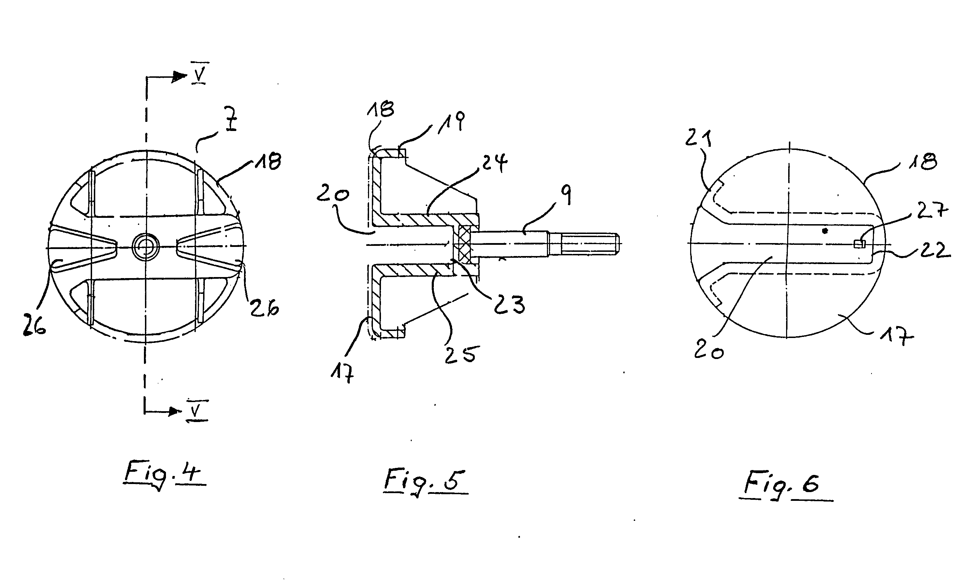

Die zylindrische Öffnung 13 im Formteil 6 dient zur Aufnahme des Aufnahmeteils 7 (siehe Fig. 4 bis 6). Das Aufnahmeteil 7 weist eine runde Frontplatte 17 mit einem an ihrem Rand 18 angeordneten, sich in Achsrichtung erstreckenden Führungsflansch 19 auf, der mit der Öffnung 13 in gleitendem Eingriff steht. D.h., der Führungsflansch 19 erstreckt sich kreisringförmig von dem Rand 18 der Frontplatte 17 in die Öffnung 13. Im mittleren Teil der Frontplatte 17, d.h. durch ihren Mittelpunkt verlaufend, ist ein sich bis zu ihrem Rand 18 erstreckender Schlitz 20 angeordnet. Der Schlitz 20 weist in seiner Längsrichtung eine Tiefe auf, die in etwa dem Durchmesser der Frontplatte 17 entspricht, und verbreitert sich in seinem vorderen Bereich, wobei an seinem vorderen Ende zwei sich in Umfangsrichtung der Frontplatte 17 erstreckende Abschlußflansche 21 vorgesehen sind.

Der Schlitz 20 ist im wesentlichen quaderförmig ausgebildet und durch eine Anschlagswand 22 in Einschiebrichtung der Abdeckplatte 3, eine hintere Wand 23 in Achsrichtung des Aufnahmeteils 7 und durch eine obere und untere Wand 24, 25 begrenzt, und ist im Bereich der Frontplatte 17 und des Randes 18 offen.

Auf seiner Rückseite weist das Aufnahmeteil 7 Rastvorsprünge 26 auf, wobei die Rastvorsprünge 26 auf der Rückseite der hinteren Wand 23 des Schlitzes 20, sich vom Rand 18 bis in die Nähe der Achse erstreckend, angeordnet sind.

Auf der Rückseite der hinteren Wand 23 des Schlitzes 20 ist weiter eine sich in Achsrichtung des Aufnahmeteils 7 erstreckende Schaftschraube 9 angeordnet, die zur Verbindung des Aufnahmeteils 7 mit dem weiter unten beschriebenen Lagerschild 8 dient. Weiter weist die hintere Wand 23 im Bereich der Anschlußwand 22 eine Verriegelungsöffnung 27 auf, in die ein entsprechender Vorsprung an der Abdeckplatte (nicht dargestellt) eingreifen kann, um ein unbeabsichtigtes Lösen der Abdeckplatte zu verhindern.

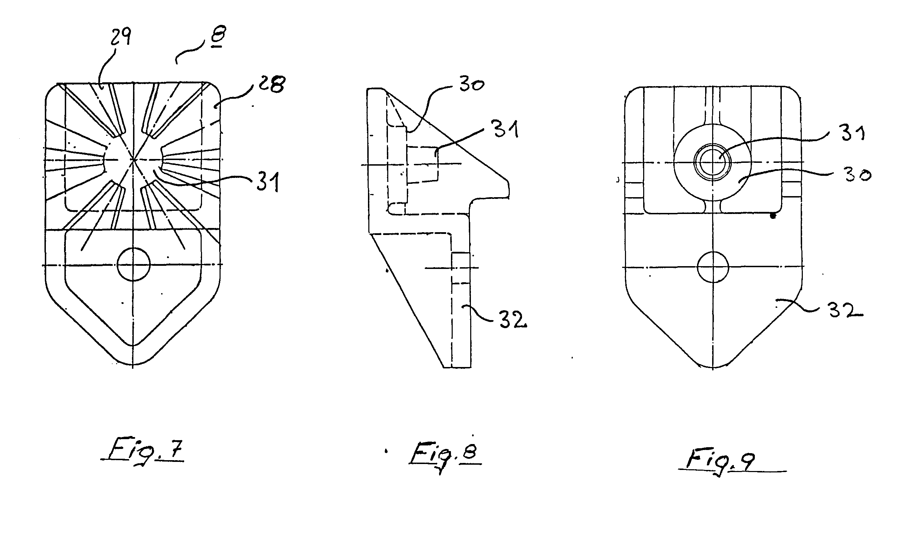

Das Lagerschild 8, das mit dem Aufnahmeteil 7 im zusammengebauten Zustand in Eingriff tritt und gegen das Aufnahmeteil 7 mittels einer auf der Schaftschraube 9 angeordneten Feder vorgespannt ist, weist eine im wesentlichen quadratische Lagerfläche 28 mit auf der Vorderseite angeordneten Rastnuten 29 auf. Die Rastnuten 29 (siehe Fig. 7) entsprechen den Rastvorsprüngen 26 des Aufnahmeteils 7, wobei sie irgendeine beliebige Form haben können. Im dargestellten Ausführungsbeispiel erstrecken sie sich sternförmig vom Mittelpunkt des Lagerschildes 8 nach außen, wobei sechs Rastnuten 29 vorgesehen sind, die mit den zwei Rastvorsprüngen 26 am Aufnahmeteil 7 in Eingriff bringbar sind, so daß drei Raststellungen möglich sind. Dabei sind die Rastnuten 29 in einem winkligen Abstand von etwa 60° angeordnet.

Zur Abstützung der Schraubenfeder weist die Lagerfläche 28 auf ihrer Rückseite eine Federgegenlagerfläche 30 auf, die rings um eine mittlere Öffnung 31 in dem Lagerschild 8 angeordnet ist. Durch die Öffnung 31 erstreckt sich die oben erwähnte Schaftschraube.

Zum Zusammenbau der Lagerung wird das Lagerschild 8 mit seinem Befestigungsabschnitt 32 an der Seitenwand des Fahrzeugs oder an dem Formteil 6 befestigt. Dann wird das Aufnahmeteil 7 in der Öffnung 13 angeordnet, wobei sich seine Schaftschraube 9 durch die mittlere Öffnung 31 im Lagerschild 8 erstreckt. Mittels einer auf dem Schaft der Schaftschraube 9 angebrachten Schraubenfeder, die sich gegen die Federgegenlagerfläche 30 abstützt, wird das Lagerschild 8 gegen das Aufnahmeteil 7 gedrückt, wobei das andere Ende der Schraubenfeder gegen eine auf die Schaftschraube 9 aufschraubbare Mutter anliegt. Durch entsprechendes Anziehen der Mutter kann die Vorspannung in gewünschter Weise eingestellt werden. Das so vormontierte Formteil 7 wird an der Seitenwand des Fahrzeugs angeschraubt.

Zum Nachstellen oder Erneuern der Lagerung ist es nicht erforderlich, das Formteil 6 vom Fahrzeug zu lösen, da ebenfalls ein Zugang zur Lagerung durch die in der oberen Wand 10 des Formteils 6 vorgesehene Montageöffnung 15 möglich ist.

## Patentansprüche

1. Lagerung (5) für eine schwenkbare Abdeckplatte (3) über dem Kofferraum 4 von Kraftfahrzeugen mit einer in mehreren Raststellungen arretierbaren, mit einem Teil der Abdeckplatte (3) in Eingriff stehenden Halterung, wobei die Lagerung ein drehbar angeordnetes Aufnahmeteil (7) für den damit in Eingriff stehenden Teil der Abdeckplatte und ein mit dem Aufnahmeteil (7) verrastbares, gegen dieses vorgespanntes Lagerschild (8) aufweist, gekennzeichnet durch ein in der Wandverkleidung einer oder beider Seitenwände des Fahrzeugs mit dieser bzw. diesen abschließend angeordnetes Formteil (6), eine in dem Formteil (6) vorgesehene, quer zur Fahrtrichtung verlaufende, zylindrische Öffnung (13) zur Aufnahme des Aufnahmeteils (7), wobei das Lagerschild (8) stationär im Formteil (6) angeordnet ist und das Formteil (6) einen in Längsrichtung verlaufenden Führungsschlitz (12) aufweist, der in die querverlaufende, zylindrische Öffnung (13) für das Aufnahmeteil (7) mündet.

2. Lagerung nach Anspruch 1, dadurch gekennzeichnet, daß das Aufnahmeteil (7) eine runde Frontplatte (17) mit einem an ihrem Rand (18) angeordneten, sich in Achsrichtung erstreckenden Führungsflansch (19), der mit der Wandung der Öffnung (13) in gleitendem Eingriff steht, aufweist.

3. Lagerung nach einem der Ansprüche 1 oder 2, dadurch gekennzeichnet, daß das Aufnahmeteil (7) einen im mittleren Teil der Frontplatte (17) angeordneten, sich bis zu ihrem Rand (18) erstreckenden Schlitz (20) aufweist, der sich in Achsrichtung von der Frontplatte (17) nach hinten erstreckt.

4. Lagerung nach einem der Ansprüche 1 bis 3, dadurch gekennzeichnet, daß der Schlitz (20) im wesentlichen quaderförmig ausgebildet ist, durch eine Anschlagswand (22) in Einschiebrichtung der Abdeckplatte (3), eine hintere Wand (23) in Achsrichtung des Aufnahmeteils (7) und durch eine obere und untere Wand (24, 25) begrenzt und im Bereich der Frontplatte (17) und des Randes (18) offen ist.

5. Lagerung nach einem der Ansprüche 1 bis 4, dadurch gekennzeichnet, daß das Aufnahmeteil (7) auf seiner Rückseite Rastvorsprünge (26) aufweist.

6. Lagerung nach einem der Ansprüche 1 bis 5, dadurch gekennzeichnet, daß die Rastvorsprünge (26) auf der Rückseite der hinteren Wand (23) des Schlitzes (20) sich vom Rand (18) bis in die Nähe der Achse erstreckend angeordnet sind.

7. Lagerung nach einem der Ansprüche 1 bis 6, dadurch gekennzeichnet, daß auf der Rückseite der hinteren Wand (23) des Schlitzes (20) eine sich in Achsrichtung erstreckende Schaftschraube (9) angeordnet ist.

8. Lagerung nach einem der Ansprüche 1 bis 7, dadurch gekennzeichnet, daß die hintere Wand (23) im Bereich der Anschlagswand (22) eine Verriegelungsöffnung (27) aufweist.

9. Lagerung nach einem der Anspruche 1 bis 8, dadurch gekennzeichnet, daß das Lagerschild (8) eine im wesentlichen quadratische Lagerfläche (28) mit auf der Vorderseite angeordneten, den Rastvorsprüngen (26) des Aufnahmeteils (7) entsprechenden Rastnuten (29) und einer mittleren Öffnung (31) für die Schaftschraube (9) des Aufnahmeteils (7) sowie einen sich von der Lagerfläche (28) erstreckenden Befestigungsabschnitt (32) aufweist.

10. Lagerung nach einem der Ansprüche 1 bis 9, dadurch gekennzeichnet, daß die Lagerfläche (28) auf ihrer Rückseite eine Federgegenlagerfläche (30) aufweist.

11. Lagerung nach einem der Ansprüche 1 bis 10, dadurch gekennzeichnet, daß das Aufnahmeteil (7), das Lagerschild (8) und das Formteil (6) als Spritzgußteile aus Kunststoff ausgebildet sind.

## Revendications

1. Monture (5) pour une tablette pivotante de recouvrement (3) au-dessus du coffre à bagages (4) de vehicules automobiles, avec une attache qui peut être bloquée dans plusieurs positions de crantage et qui est en prise avec une partie de la tablette de recouvrement (3), la monture présentannt une piece de logement (7) montée à rotation pour la partie de la tablette de recouvrement qui est en prise avec elle et un flasque (8) enclenchable dans la pièce de logement (7) et précontraint contre celle-ci, caractérisée par une pièce moulée (6) disposée dans le revêtement d'une ou des deux parois latérales du véhicule sans solution de continuité avec celle-ci ou celles-ci, et par une ouverture cylindrique (13) s'étendant transversalement par rapport à la direction de marche, formée dans la pièce moulée (6) et destinée à recevoir la pièce de logement (7), le flasue (8) étant monté en position immobile dans la pièce moulée (6) et la pièce moulée (6) présentant une rainure de guidage (12) qui s'étend dans la direction longitudinale et qui débouche dans l'ouverture cylindrique (13) dirigée transversalement pour la pièce de logement (7).

2. Monture selon la revendication 1, caractérisée en ce que la pièce de logement (7) comporte une plaque frontale ronde (17) avec un rebord de guidage (19) qui est situé sur son bord (18), s'étend en direction axiale et est en prise glissante avec la paroi de l'ouverture (13).

3. Monture selon la revendication 1 ou 2, caractérisée en ce que la pièce de logement (7) présente une fente (20) qui est disposée dans la partie moyenne de la plaque frontale (17), s'étend jusqu'au bord (18) de celle-ci et s'étend depuis la plaque frontale (17) vers l'arrière en direction axiale.

4. Monture selon l'une quelconque des revendications 1 à 3, caractérisée en ce que la fente (20) est réalisée sous forme essentiellement parallélépipédique, est limitée par une paroi de butée (22) dans la direction d'introduction de la tablette de recouvrement (3), par une paroi postérieure (23) dans la direction axiale de la pièce de logement (7) et par des parois supérieure et inférieure (24, 25) et est ouverte dans la région de la plaque frontale (17) et du bord (18).

5. Monture selon l'une quelconque des revendications 1 à 4, caractérisée en ce que la pièce de logement (7) présente des saillies d'enclenchement (26) sur son côté arrière.

6. Monture selon l'une quelconque des revendications 1 à 5, caractérisée en ce que les saillies d'enclenchement (26) sont disposées sur le côté arrière de la paroi postérieure (23) de la fente (20) de manière à s'étendre depuis le bord (18) jusqu'à proximité de l'axe.

7. Monture selon l'une quelconque des revendications 1 à 6, caractérisée en ce qu'une vis sans tête partiellement filetée (9), s'étendant en direction axiale, est disposée sur le côte arrière de la paroi postérieure (23) de la fente (20).

8. Monture selon l'une quelconque des revendications 1 à 7, caractérisée en ce que la paroi postérieure (23) présente une ouverture de verrouillage (27) dans la région de la paroi de butée (22).

9. Monture selon l'une quelconque des revendications 1 à 8, caractérisée en ce que le flasque (8) comporte une surface d'appui sensiblement carrée (28) avec des rainures d'enclenchement (29) disposées sur la face avant et correspondant aux saillies d'enclenchement (26) de la pièce de logement (7) et avec une ouverture centrale (31) pour la vis sans tête partiellement filetée (9) de la pièce de logement (7), ainsi qu'une partie de fixation (32) qui s'étend depuis la surface d'appui (28).

10. Monture selon l'une quelconque des revendications 1 à 9, caractérisée en ce que la surface d'appui (28) présente, sur sa face arrière, une surface de butée de ressort (30).

11. Monture selon l'une quelconque des revendications 1 à 10, caractérisée en ce que la pièce de logement (7), le flasque (8) et la pièce moulée (6) sont réalisés sous forme de pièces moulées par injection en matière plastique.

**Claims**

1. Mounting (5) for a pivotable cover plate (3) above the boot (4) of motor vehicles, comprising a holding device which can be locked in a plurality of catch positions and is in engagement with a part of the cover plate (3), the mounting having a rotatably arranged receiving part (7) for the part of the cover plate in engagement with it and an end shield (8) which can be interlocked with the receiving part (7) and is preloaded against the latter, characterized by a moulded part (6) arranged in the wall panelling of one or both side walls of the vehicle in such a way as to close off this side wall or these side walls, and a cylindrical opening (13), provided in the moulded part (6) and running transversely to the direction of travel, for accommodating the receiving part (7), the end shield (8) being arranged in a stationary manner in the moulded part (6) and the moulded part (6) having a guide slot (12) which runs in the longitudinal direction and leads into the transversely running, cylindrical opening (13) for the receiving part (7).

2. Mounting according to Claim 1, characterized in that the receiving part (7) has a round front plate (17) with a guide flange (19) which is arranged at its margin (18), extends in the axial direction and is in sliding engagement with the wall of the opening (13).

3. Mounting according to either of Claims 1 and 2, characterized in that the receiving part (7) has a slot (20) which is arranged in the centre part of the front plate (17), extends up to its margin (18) and extends from the front plate (17) to the rear in the axial direction.

4. Mounting according to one of Claims 1 to 3, characterized in that the slot (20) is designed essentially in the shape of a parallelepiped, is defined by a stop wall (22) in the push-in direction of the cover plate (3), a rearwall (23) in the axial direction of the receiving part (7) and by a top and bottom wall (24, 25) and is open in the area of the front plate (17) and the margin (18).

5. Mounting according to one of Claims 1 to 4, characterized in that the receiving part (7) has catch projections (26) on its rear side.

6. Mounting according to one of Claims 1 to 5, characterized in that the catch projections (26) are arranged on the rear side of the rear wall (23) of the slot (20) in such a way as to extend from the margin (18) into the proximity of the axis.

7. Mounting according to one of Claims 1 to 6, characterized in that a shoulder stud (9) extending in the axial direction is arranged on the rear side of the rear wall (23) of the slot (20).

8. Mounting according to one of Claims 1 to 7, characterized in that the rear wall (23) has a locking opening (27) in the area of the stop wall (22).

9. Mounting according to one of Claims 1 to 8, characterized in that the end shield (8) has an essentially square bearing surface (28) having catch grooves (29) arranged on the front side and corresponding to the catch projections (26) of the receiving part (7) and a centre opening (31) for the shoulder stud (9) of the receiving part (7) as well as a fixing section (32) extending from the bearing surface (28).

10. Mounting according to one of Claims 1 to 9, characterized in that the bearing surface (28) has a spring abutment surface (30) on its rear side.

11. Mounting according to one of Claims 1 to 10, characterized in that the receiving part (7), the end shield (8) and the moulded part (6) are designed as plastic injection mouldings.

Fig. 1

Fig. 2

1

Fig.3

EP 0 332 059 B1

Fig.6

Fig.5

Fig.4

Fig.9

Fig.8

Fig.7